# FASCICULE DE BREVET EUROPEEN

(11) **EP 0 708 543 B1**
(45) Date de publication et mention de la délivrance du brevet: **08.01.2003**
(21) Numéro de dépôt: 94402325.8
(22) Date de dépôt: 18.10.1994
(51) Int. Cl.: H04L 1/04, H04B 7/12

(54) **Procédé de transmission d'un signal sur au moins deux canaux**
Verfahren zur Signalübertragung auf mindestens zwei Kanälen
Method for signal transmission on at least two channels

(43) Date de publication de la demande: 24.04.1996
(73) Titulaire: ATRAL, F-38190 Crolles (FR)
(72) Inventeur: ATRAL, F-38190 Crolles (FR)
(74) Mandataire: Casalonga, Axel

(56) Documents cités:
- EP-A- 0 370 862
- WO-A-91/18458
- US-A- 2 397 884

## Description

La présente invention concerne un procédé de transmission d'un signal portant une information de commande ou d'alarme, en particulier un signal numérique, entre un dispositif d'émission et un dispositif de réception en vue de l'exploitation du signal reçu.

Les documents WO-A-91 18 458 et US-A-2 397 884 décrivent des systèmes de transmission sur plusieurs fréquences nominales. Ces documents s'intéressent uniquement à la différenciation de ces fréquences nominales.

Dans un mode de transmission particulièrement intéressant décrit dans le brevet FR-A-8814782, il est décrit un procédé et un système de transmission d'un signal transformé en deux signaux intermédiaires transmis sur au moins deux canaux de transmission différents à fréquences porteuses.

La présente invention a notamment pour but un perfectionnement à ce procédé et ce dispositif connus.

Le procédé selon l'invention, de transmission d'un signal portant au moins une information de commande ou d'alarme, en particulier un signal numérique, par voie radioélectrique entre un dispositif d'émission et un dispositif de réception en vue de l'exploitation du signal reçu, met en oeuvre un dispositif d'émission comprenant au moins un premier moyen d'émission et un second moyen d'émission adaptés pour émettre des signaux porteurs de la même information sur au moins deux canaux de transmission différents à fréquences porteuses différentes, et un dispositif de réception comprenant au moins un premier moyen de réception et un second moyen de réception indépendants adaptés pour recevoir et détecter les signaux sur respectivement lesdits canaux de transmission à fréquences porteuses différentes. Généralement, chaque moyen de réception est sensible à une bande de fréquences de réception dans laquelle se situe la fréquence porteuse correspondante et présente une ou des bandes de fréquences accessoires qui sont extérieures à sa bande de fréquences de réception et dans lesquelles il est sensible à des signaux présentant un niveau de champ électromagnétique supérieur à une valeur déterminée.

Selon l'invention, la bande de fréquences de réception et la ou les bandes de fréquences accessoires de l'un desdits moyens de réception et la bande de fréquences de réception et la ou les bandes de fréquences accessoires de l'autre moyen de réception sont disjointes. Ainsi, tout signal de niveau inférieur au niveau précité, reçu par l'un desdits moyens de réception et situé dans la bande de fréquences de réception ou dans la ou l'une des bandes de fréquences accessoires de ce moyen de réception sont indétectables par l'autre moyen de réception.

Selon l'invention, le rapport entre lesdites fréquences porteuses est de préférence supérieur ou égal à 1,1.

Selon l'invention, l'une desdites fréquences porteuses est choisie de préférence dans une bande de fréquences de réception située au-dessous de 300 MHz et l'autre est choisie de préférence dans une bande de fréquences de réception située au-dessus de 300 MHz.

Selon l'invention, la valeur déterminée précitée du niveau de champ électromagnétique déterminant les bandes de fréquences accessoires précitées est supérieure ou égale à 20 décibels au-dessus du signal reçu le plus petit auquel sont sensibles les moyens de réception.

Le procédé de transmission selon la présente invention présente de nombreux avantages, notamment lorsqu'il est mis en oeuvre pour la transmission d'informations d'alarme ou de sécurité pour laquelle on souhaite que ces informations émises puissent être impérativement reçues afin d'être exploitées.

Le procédé selon l'invention permet de s'accommoder des caractéristiques de réception des récepteurs radioélectriques connus, quelque soit leur type, qui notamment peuvent être sensibles à un signal reçu dans une zone de fréquences excédant la bande de fréquences de réception dans laquelle se situe la fréquence porteuse du canal de transmission associé et qui notamment peuvent être sensibles à un signal reçu dans une autre ou d'autres bandes de fréquences accessoires du spectre de fréquences.

Ainsi, dans le cas de l'émission volontaire ou involontaire d'un signal d'amplitude inférieure à un niveau déterminé dans l'une des bandes de fréquences précitées de l'un desdits moyens de réception, même en dehors de sa bande de fréquences de réception détectant la fréquence porteuse du canal de transmission associé, il se peut que la réception et en conséquence l'exploitation du signal transmis par le moyen d'émission associé ne soient pas possibles par ce moyen de réception. Cette situation correspond à un brouillage de ce canal de transmission par une émission perturbatrice hors de la bande de réception de ce moyen de réception.

Grâce au procédé de transmission de l'invention, le signal transmis par l'autre moyen d'émission sur l'autre canal de transmission peut être reçu et en conséquence exploité par le moyen de réception associé puisque la bande de réception et la ou les bandes de fréquences accessoires de cet autre moyen de réception ne subissent aucune perturbation par le signal reçu précité d'amplitude inférieure au niveau déterminé.

Par ailleurs, selon l'invention, le choix précité pour les fréquences porteuses différentes des canaux de transmission précités et les bandes de réception précitées des moyens de réception sont tels que les modes de propagation du champ électromagnétique sont différents et complémentaires.

En effet, lorsque la fréquence porteuse précitée est inférieure à 300 MHz, la propagation du champ électromagnétique contenant le signal à transmettre s'effectue principalement en ligne directe à travers les obstacles tandis que lorsqu'elle est supérieure à 300 MHz, la propagation du champ électromagnétique contenant le signal à transmettre s'effectue principalement par réflection et diffraction.

Selon l'invention, l'utilisation simultanée et indépendante de deux bandes de fréquences ayant des modes de propagation complémentaires différemment sensibles aux mêmes causes de perturbation permet d'assurer une très grande fiabilité de la transmission entre le dispositif d'émission et le dispositif de réception quels que soient le site, son environnement électrique ou radioélectrique et son évolution dans le temps.

La présente invention sera mieux comprise à l'étude d'un dispositif de transmission mettant en oeuvre le procédé de transmission selon l'invention, décrit à titre d'exemple non limitatif et illustré par le dessin sur lequel :
- la figure 1 représente la courbe de sensibilité d'un récepteur connu ;
- la figure 2 représente schématiquement un dispositif de transmission d'un signal mettant en oeuvre le procédé de transmission de l'invention ;
- et la figure 3 représente les positions relatives des courbes de sensibilité des récepteurs du dispositif de transmission de la figure 2.

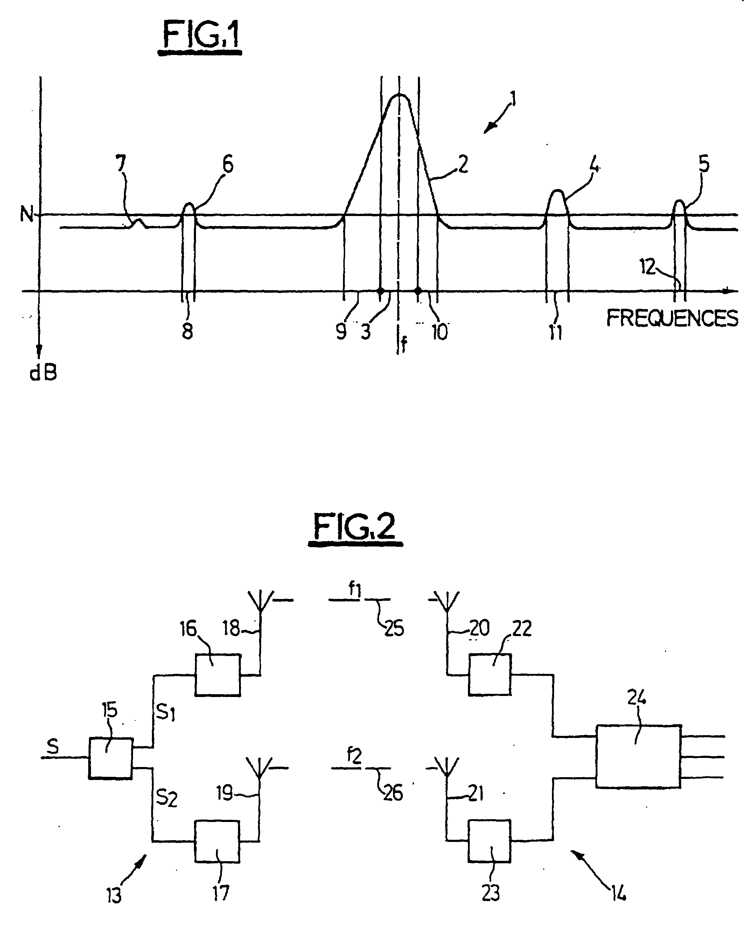

Les récepteurs radioélectriques connus, par exemple du type superhétérodyne, sont construits à l'aide de composants électroniques ou électriques qui leur confèrent une courbe de sensibilité du genre de celle représentée sur la figure 1.

Cette courbe de sensibilité 1 fréquence-amplitude présente une zone principale de sensibilité 2 dans laquelle se situe la bande de fréquences de réception 3 du récepteur, cette bande contenant la fréquence nominale f de sensibilité du récepteur, ainsi que des zones de fréquences accessoires de sensibilité situées en d'autres endroits du spectre de fréquences. Cette courbe de sensibilité peut varier d'un récepteur à l'autre en fonction de la technologie utilisée pour sa construction et son fonctionnement. Dans l'exemple, cette courbe présente principalement deux zones accessoires 4 et 5 à des fréquences plus hautes que la fréquence nominale f, et des zones accessoires 6 et 7 à des fréquences plus basses que la fréquence nominale f.

De tels récepteurs peuvent donc être sensibles à des champs électromagnétiques dont la fréquence est située dans l'une quelconque des zones 2, 4, 5 et 6 précitées, et cela d'autant plus que le signal reçu présente un niveau de champ électromagnétique élevé. Ainsi, comme le montre la figure 1, lorsque le niveau de champ électromagnétique d'un signal radioélectrique est supérieur à une valeur N, ce niveau, dans le sens croissant des fréquences du spectre, ne coupe pas la zone 7 et coupe la zone de sensibilité 6 dans laquelle il détermine une bande accessoire de sensibilité 8, la zone de sensibilité 2 dans laquelle il détermine une bande accessoire de sensibilité 9 et une bande accessoire de sensibilité 10 situées de part et d'autre de la bande nominale de sensibilité du récepteur, la zone de sensibilité 4 dans laquelle il détermine une bande accessoire de sensibilité 11, et la zone de sensibilité 5 dans laquelle il détermine une bande accessoire de sensibilité 12. A un niveau inférieur, seules les zones 2 et 4 seraient coupées et à un niveau encore inférieur, seule la zone 2 serait coupée et déterminerait deux bandes accessoires de sensibilité de part et d'autre de la bande nominale de sensibilité 3.

Il s'ensuit que le récepteur en question peut être perturbé par des signaux de forte amplitude apparaissant sur des fréquences autres que celles de sa bande nominale de réception.

En se reportant maintenant à la figure 2, on voit qu'on a représenté un système de transmission d'un signal par voie radioélectrique.

Ce système de transmission comprend un dispositif d'émission repéré d'une manière générale par la référence 13 et un dispositif de réception repéré d'une manière générale par la référence 14.

Le dispositif d'émission 13 comprend un circuit électronique de transformation 15 qui reçoit à son entrée un signal S en bande de base portant une information de commande ou d'alarme à transmettre, par exemple un signal provenant d'un interrupteur, d'un détecteur de présence, de vol, d'incendie ou autres, et qui fournit, par ses deux sorties, à l'entrée de deux émetteurs indépendants 16 et 17 des signaux intermédiaires S1 et S2 en bande de base, les sorties des émetteurs 16 et 17 étant reliées à des antennes 18 et 19.

Le circuit électronique de transformation 15 est tel que les signaux S1 et S2 sont des images du signal S à transmettre, c'est-à-dire qu'ils sont porteurs de la même information que le signal S en bande de base et sont également en bande de base. Selon un exemple simple, le signal S étant numérique, le circuit 15 peut être constitué par un inverseur de telle sorte que par exemple le signal S1 soit identique au signal S et que le signal S2 soit l'inverse de ce signal S.

Le dispositif de réception 14 comprend deux antennes 20 et 21 qui sont reliées à deux récepteurs indépendants 22 et 23 dont les sorties sont reliées à des entrées d'un circuit électronique de traitement, c'est à dire d'exploitation 24 des signaux radioélectriques reçus par les antennes 20 et 21.

Les émetteurs 16 et 17 sont adaptés pour émettre, par l'intermédiaire de leurs antennes 18 et 19, les signaux S1 et S2 sur deux canaux de transmission différents indiqués en 25 et 26, à fréquences porteuses différentes f1 et f2.

Les récepteurs 22 et 23 indépendants sont adaptés pour recevoir et détecter les signaux sur respectivement les canaux 25 et 26, c'est-à-dire qu'ils présentent une sensibilité nominale, c'est-à-dire une bande de fréquences de réception, fixée sur les fréquences porteuses f1 et f2 précitées. Ainsi, les récepteurs 22 et 23 peuvent respectivement recevoir les signaux S1 et S2 en bande de base, émis par les émetteurs 11 et 12 sur les fréquences f1 et f2 des canaux de transmission 25 et 26, et les fournir au circuit électronique d'exploitation 24.

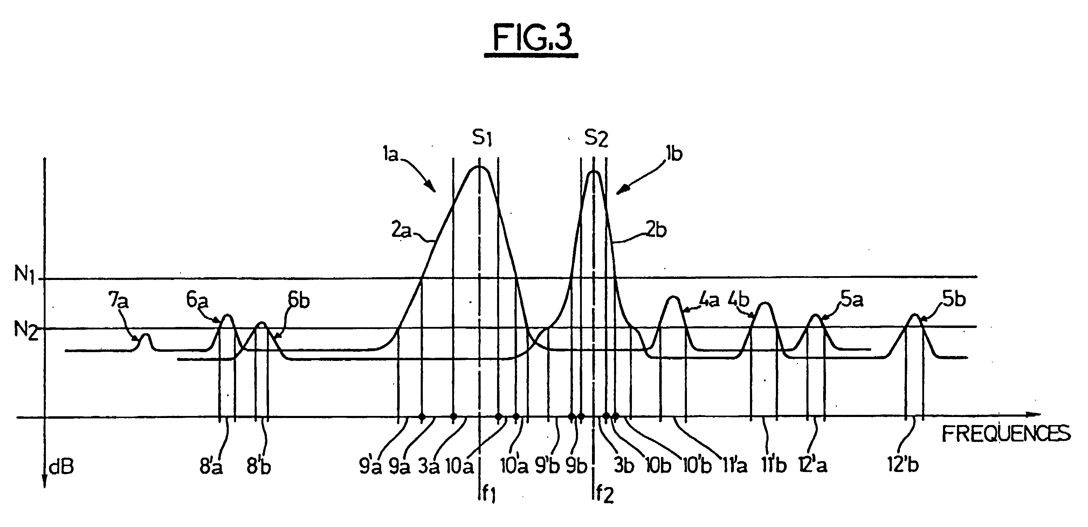

En se reportant maintenant à la figure 3, on voit que les récepteurs 22 et 23 présentent des courbes de sensibilité 1a et 1b qui correspondent sensiblement à la courbe de sensibilité 1 décrite précédemment d'une manière générale en référence à la figure 1.

La courbe de sensibilité 1a présente une zone de sensibilité 2a dans laquelle se trouve la bande nominale de réception 3a de fréquence f1 et des zones de sensibilité accessoires 4a, 5a, 6a et 7a.

La courbe de sensibilité 1b présente une zone de sensibilité 2b dans laquelle se trouve la bande nominale de réception 3b de fréquence f2 et des zones de sensibilité accessoires 4b, 5b et 6b.

Un niveau de champ électromagnétique N1 d'un signal radioélectrique à une fréquence quelconque du spectre de fréquences, par exemple supérieur à 20 décibels, coupe les zones de sensibilité 2a et 2b des récepteurs 22 et 23, ce niveau étant suffisamment bas pour passer au-dessous des crêtes des zones de sensibilité accessoires 4a, 5a, 6a et 7a du récepteur 22 et des zones de sensibilité accessoires 4b, 5b et 6b du récepteur 23 et en conséquence ne les coupant pas.

Ce niveau détermine de part et d'autre de la bande de réception 3a du récepteur 22 des bandes accessoires de sensibilité 9a et 10a de part et d'autre de la bande de réception 3b du récepteur 23 des bandes accessoires de sensibilité 9b et 10b.

Selon l'invention, les bandes accessoires de sensibilité 9a et 10a et les bandes accessoires de sensibilité 9b et 10b sont disjointes. En particulier, les bandes accessoires voisines 10a et 9b sont disjointes.

Celà signifie que tout signal radioélectrique de niveau inférieur au niveau N1, reçu par le récepteur 22 dans ses bandes accessoires 9a et 10a est indétectable par le récepteur 23 et que tout signal radioélectrique de niveau inférieur au niveau N1, reçu par le récepteur 23 dans ses bandes accessoires 9b et 10b est indétectable par le récepteur 22.

Pour un niveau de champ électromagnétique N2 plus élevé que N1, ce niveau N2 coupe, comme le montre la figure 3, les zones de sensibilité 2a, 4a, 5a et 6a du récepteur 22 et les zones de sensibilité 2b, 4b, et 6b du récepteur 23. Ce niveau N2 détermine des bandes accessoires de sensibilité 8'a, 9'a, 10'a, 11'a et 12'a respectivement dans les zones de sensibilité 6a, 2a, 4a, 5a du récepteur 22 et des bandes accessoires de sensibilité 8'b, 9'b, 10'b, 11'b et 12'b respectivement dans les zones de sensibilité 6b, 2b, 4b, 5b du récepteur 23, comme définies plus haut. Selon l'invention, ces bandes accessoires de sensibilité 8'a, 9'a, 10'a, 11'a et 12'a du récepteur 22 et ces bandes accessoires de sensibilité 8'b, 9'b, 10'b, 11'b et 12'b du récepteur 23 sont disjointes. Ainsi tout signal radioélectrique de niveau inférieur au niveau N2, reçu par l'un des récepteurs 22 et 23 est indétectable par l'autre récepteur.

En conséquence, si le récepteur 22 reçoit des signaux autres que le signal S1 ou en même temps et présentant un niveau de champ électrique supérieur à une valeur choisie générant les bandes accessoires de sensibilité précitées, ces signaux étrangers sont susceptibles de le perturber et d'empêcher le circuit d'exploitation 24 d'interpréter le signal S1. Cependant, grâce à l'invention, cette perturbation n'aura aucune influence sur le récepteur 23 qui peut alors détecter et recevoir le signal S2. Ce signal S2 reçu peut alors être interprété par le circuit d'exploitation 24. L'information contenue dans le signal à transmettre S est donc bien arrivée jusqu'au circuit d'exploitation 24 malgré les perturbations précitées. Et réciproquement en ce qui concerne une perturbation éventuelle du récepteur 23.

Ainsi, l'invention permet d'assurer la transmission du signal S jusqu'au circuit d'exploitation 24 même si l'un des canaux de transmission 25 et 26 est perturbé par tout signal radioélectrique, même de forte amplitude, dans ses bandes de fréquences de sensibilité déterminée par la valeur de cette amplitude, la transmission du signal S s'effectuant par l'autre canal.

Dans une exécution préférée, le rapport entre les fréquences porteuses f1 et f2 est de préférence supérieur ou égal à 1,1, étant entendu que l'invention propose que la fréquence porteuse f1 soit choisie dans une bande de fréquences de réception inférieure à 300 MHz et que la fréquence f2 soit choisie dans une bande de fréquences de réception supérieure à 300 MHz, les émetteurs 16 et 17 émettant les signaux S1 et S2 sur les fréquences f1 et f2 ainsi choisies et les récepteurs 22 et 23 ayant des bandes nominales de réception prévues sur ces fréquences choisies. Ce choix particulier présente l'avantage de disposer de canaux de transmission 25 et 26 dans lesquels les modes de propagation des champs électromagnétiques sont différents, les avantages de ce choix ayant été mentionnés plus haut.

En exemple, la fréquence f1 peut être autour de 40 MHz et la fréquence f2 peut être autour de 400 MHz et la valeur déterminée du niveau de champ électromagnétique auquel peuvent être sensibles les récepteurs 22 et 23 peut être supérieure ou égale à 20 décibels.

La présente invention ne se limite pas à l'exemple décrit ci-dessus, notamment en ce qui concerne la structure des émetteurs et des récepteurs. Bien des variantes sont possibles sans sortir du cadre des revendications annexées.

## Revendications

1. Procédé de transmission d'un signal (S) portant au moins une information de commande ou d'alarme, par voie radioélectrique entre un dispositif d'émission (13) et un dispositif de réception (14) en vue de l'exploitation du signal reçu, le dispositif d'émission (13) comprenant au moins un premier moyen d'émission (16) et un second moyen d'émission (17) adaptés pour émettre des signaux porteurs de la même information (S1, S2) sur au moins deux canaux de transmission différents (25, 26) à fréquences porteuses différentes (f1, f2), le dispositif de réception (14) comprenant au moins un premier moyen de réception (22) et un second moyen de réception (23) indépendants adaptés pour recevoir et détecter les signaux sur respectivement lesdits canaux de transmission à fréquences porteuses différentes (f1, f2), chaque moyen de réception étant sensible à une bande de fréquences de réception (3) dans laquelle se situe la fréquence porteuse correspondante et présentant une ou des bandes de fréquences accessoires (8, 9, 10, 11, 12) qui sont extérieures à sa bande de fréquences de réception et dans lesquelles il est sensible à des signaux présentant un niveau de champ électromagnétique supérieur à une valeur déterminée (N), **caractérisé par le fait que** la bande de fréquences de réception (3a) et la ou les bandes de fréquences accessoires (8'a, 9'a, 10'a, 11'a, 12'a) de l'un desdits moyens de réception et la bande de fréquences de réception (3b) et la ou les bandes de fréquences accessoires (8'b, 9'b, 10'b, 11'b, 12'b) de l'autre moyen de réception sont disjointes, et qu'ainsi, tout signal de niveau inférieur au niveau précité (N1, N2), reçu par l'un desdits moyens de réception et situé dans la bande de fréquences de réception ou dans la ou l'une des bandes de fréquences accessoires de ce moyen de réception sont indétectables par l'autre moyen de réception.

2. Procédé selon la revendication 1, **caractérisé par le fait que** le rapport entre la fréquence porteuse la plus grande (f1) et la fréquence porteuse la plus petite (f1) est supérieur ou égal à 1,1.

3. Procédé selon l'une des revendications 1 et 2, **caractérisé par le fait que** l'une desdites fréquences porteuses (f1, f2) est choisie dans une bande de fréquences de réception située au-dessous de 300 MHz et l'autre est choisie dans une bande de fréquences de réception située au-dessus de 300 MHz.

4. Procédé selon l'une quelconque des revendications précédentes, **caractérisé par le fait que** la valeur déterminée précitée du niveau de champ électromagnétique déterminant les bandes de fréquences accessoires précitées (8'a, 9'a, 10'a, 11'a, 12'a) est égale à celle du signal le plus petit auquel sont sensibles les moyens de réception, augmentée de 20 décibels.

## Patentansprüche

1. Verfahren zur Übertragung eines Signals (S), das mindestens eine Steuer- oder Alarminformation trägt, auf funkelektrischem Weg zwischen einer Sendeeinrichtung (13) und einer Empfangseinrichtung (14) zur Auswertung des empfangenen Signals, wobei die Sendeeinrichtung (13) mindestens ein erstes Sendemittel (16) und ein zweites Sendemittel (17) umfasst, die derart ausgeführt sind, dass sie Signale, die dieselbe Information (S1, S2) tragen, auf mindestens zwei unterschiedlichen Übertragungskanälen (25, 26) mit unterschiedlichen Trägerfrequenzen (f1, f2) entsenden, wobei die Empfangseinrichtung (14) mindestens ein erstes Empfangsmittel (22) und ein zweites Empfangsmittel (23) umfasst, die unabhängig und derart ausgeführt sind, dass sie die Signale jeweils auf den Übertragungskanälen mit unterschiedlichen Trägerfrequenzen (f1, f2) empfangen und erfassen, wobei jedes Empfangsmittel für ein Empfangsfrequenzband (3) empfindlich ist, in dem sich die entsprechende Trägerfrequenz befindet, und ein oder mehrere Zusatzfrequenzbänder (8, 9, 10, 11, 12) aufweist, die außerhalb seines Empfangsfrequenzbandes liegen und in denen es für Signale empfindlich ist, die einen Pegel des elektromagnetischen Feldes aufweisen, der höher als ein bestimmter Wert (N) ist, **dadurch gekennzeichnet, dass** das Empfangsfrequenzband (3a) und das bzw. die Zusatzfrequenzbänder (8'a, 9'a, 10'a, 11'a, 12'a) eines der Empfangsmittel und das Empfangsfrequenzband (3b) und das bzw. die Zusatzfrequenzbänder (8'b, 9'b, 10'b, 11'b, 12'b) des anderen Empfangsmittels getrennt sind, und dass somit jedes Signal mit einem Pegel unter dem vorgenannten Pegel (N1, N2), das von einem der Empfangsmittel empfangen wird und sich in dem Empfangsfrequenzband oder in dem bzw. einem der Zusatzfrequenzbänder dieses Empfangsmittels befindet, für das andere Empfangsmittel nicht erfassbar ist.

2. Verfahren nach Anspruch 1, **dadurch gekennzeichnet, dass** das Verhältnis zwischen der größten Trägerfrequenz (f1) und der kleinsten Trägerfrequenz (f1) größer oder gleich 1,1 ist.

3. Verfahren nach einem der Ansprüche 1 und 2, **dadurch gekennzeichnet, dass** eine der Trägerfrequenzen (f1, f2) in einem Empfangsfrequenzband ausgewählt wird, das unter 300 MHz liegt, und dass die andere in einem Empfangsfrequenzband ausgewählt wird, das über 300 MHz liegt.

4. Verfahren nach einem der vorhergehenden Ansprüche, **dadurch gekennzeichnet, dass** der vorgenannte bestimmte Wert des Pegels des elektromagnetischen Feldes, der die vorgenannten Zusatzfrequenzbänder (8'a, 9'a, 10'a, 11'a, 12'a) bestimmt, gleich jenem des kleinsten Signals ist, für das die Empfangsmittel empfindlich sind, erhöht um 20 Dezibel.

## Claims

1. Method of transmitting a signal (S) carrying at least one control or alarm information item, via a radio channel between an emitting device (13) and a receiving device (14) for the purpose of exploiting the received signal, the emitting device (13) comprising at least a first emitting means (16) and a second emitting means (17) suitable for emitting signals carrying the same information item (S1, S2) over at least two different transmission channels (25, 26) at different carrier frequencies (f1, f2), the receiving device (14) comprising at least a first independent receiving means (22) and a second independent receiving means (23) suitable for receiving and detecting the signals over the said transmission channels respectively at different carrier frequencies (f1, f2), each receiving means being sensitive to a receiving frequency band (3) in which the corresponding carrier frequency is located and having one or more additional frequency bands (8, 9, 10, 11, 12) which are outside its receiving frequency band and in which it is sensitive to signals having an electromagnetic field level greater than a predetermined value (N), **characterized in that** the receiving frequency band (3a) and the additional frequency band or bands (8'a, 9'a, 10'a, 11'a, 12'a) of one of the said receiving means and the receiving frequency band (3b) and the additional frequency band or bands (8'b 9'b, 10'b, 11'b, 12'b) of the other receiving means are separate, and that therefore any signal with a level less than the aforementioned level (N1, N2) received by one of the said receiving means and located in the receiving frequency band or in the or one of the additional frequency bands of this receiving means are undetectable by the other receiving means.

2. Method according to Claim 1, **characterized in that** the ratio of the greatest carrier frequency (f1) to the smallest carrier frequency (f1) is greater than or equal to 1.1.

3. Method according to one of Claims 1 and 2, **characterized in that** one of the said carrier frequencies (f1, f2) is chosen with in a receiving frequency band located below 300 MHz and the other is chosen within a receiving frequency band located above 300 MHz.

4. Method according to any one of the preceding claims, **characterized in that** the aforementioned determined value of the electromagnetic field level determining the aforementioned additional frequency bands (8'a, 9'a, 10'a, 11'a, 12'a) is equal to that of the smallest signal to which the receiving means are sensitive, increased by 20 decibels.
